# EUROPÄISCHE PATENTSCHRIFT

(11) **EP 0 382 030 B1**
(45) Veröffentlichungstag und Bekanntmachung des Hinweises auf die Patenterteilung: **02.11.1995**
(21) Anmeldenummer: 90101669.1
(22) Anmeldetag: 27.01.1990
(51) Int. Cl.: G01B 11/16, G01L 1/24, G01L 11/00, G01M 11/08, G01D 5/26

(54) **Messvorrichtung zum Erfassen von Wegstrecken**
Measuring device to detect distances
Dispositif de mesure pour détecter des distances

(30) Priorität: 10.02.1989 DE 3903881
(43) Veröffentlichungstag der Anmeldung: 16.08.1990
(73) Patentinhaber: Daimler-Benz Aerospace Airbus Gesellschaft mit beschränkter Haftung, 21129 Hamburg (DE)
(72) Erfinder: Gleine, Wolfgang, D-2160 Stade / Hagen (DE)
(74) Vertreter: Hansmann, Dierk, Dipl.-Ing.

(56) Entgegenhaltungen:
- WO-A-85/03855
- DE-A- 3 016 104
- US-A- 4 717 253
- CONFERENCE PROCEEDINGS IEEE SOUTHEASTCON 1986, 23.-25. März 1986, Seiten 91-94, Richmond, Virginia, USA ; J.C. SHIH et al.: "Concentric core optical fiber strain sensor"
- HALBLEITER-SCHALTUNGSTECHNIK, 5. Auflage, Springer 1980, Berlin, DE, Seiten 466-468, U. TIEFZE et al.

## Beschreibung

Die Erfindung bezieht sich auf eine Vorrichtung zur Wegstreckenmessung mit einem optischen Meßelement das mindestens zwei in dichtem Abstand nebeneinander angeordnete Lichtleiter aufweist, das aus einem länglichen Träger besteht, in den die Lichtleiter zueinander parallel eingebettet sind, das an einem Ende, dem Sensoreingang, gegen seitliche Verschiebungen gehalten ist und in einem anderen Bereich unter gemeinsamer Verbiegung des Trägers und der Lichtleiter um die zu verschiebende Wegstrecke seitlich verschiebbar ist, das derart ausgebildet ist, daß bei bestimmter Verbiegung der Lichtleiter ein bestimmter Betrag des in einen Lichtleiter eingekoppelten Lichts in den anderen Lichtleiter überkoppelt, und das eine Verspiegelung aufweist, durch das Licht, das sich in den Lichtleitern zum anderen Ende des Meßelements hin ausbreitet, zum Sensoreingang zurückreflektiert wird, mit Mitteln zum Einkoppeln von Licht am Sensoreingang des Meßelements, und mit einer Einrichtung, durch die das überkoppelte, von der Verspiegelung reflektierte und am Sensoreingang austretende Licht erfaßt wird und aus der Intensität und Laufzeit dieses Lichtes die Verschiebung bzw. Wegstrecke bestimmt wird. Eine derartige Vorrichtung wird in DE-A-3 016 104 beschrieben.

Meßvorrichtungen mit auf optischer Basis arbeitenden Meßelementen sind grundsätzlich bekannt. So zeigt die DE-C-35 41 733 eine Meßvorrichtung, in der zwei zur Druckmessung eingesetzte optische Resonatoren das mit einer Laserlichtquelle und einer Auswerteschaltung gekoppelte Meßelement bilden. Die optischen Resonatoren werden hierbei durch Gradientenindex-Lichtwellenleiterabschnitte gebildet, die auf der Oberseite und der Unterseite eines durch Druck elastisch verformbaren Sensorkörpers angeordnet sind. Mit dem Aufbringen von Druck wird eine gegenläufige Verstimmung der Resonatoren bewirkt und die Verstimmung ist das Maß für den aufgebrachten Druck. Zur Wegmessung ist eine solche Meßvorrichtung aber nicht geeignet, da die erzielbaren Auslenkungen keine hinreichende Meßstrecke ergeben.

Weiterhin ist es aus der US-A-4 717 253 bekannt, das von einem Eingangslichtleiter in einen längeren Ausgangslichtleiter überkoppelnde Licht zweier nebeneinanderliegender Lichtleiter zu erfassen. Ein solches Meßelement ist nur in der Lage relativ kleine Abstände zu messen. Bei dieser Ausbildung sind die Lichtleiter in einem Material eingebettet und es wird sich wegen ändernder mechanischer Spannung entlang der Meßstelle - insbesondere an den Enden der Meßstelle, wo die Spannung gegen Null gehen muß - die Verschiebung der Lichtleiter entlang der Meßstelle ändern, was zur Verbiegung der Lichtleiter führen wird und damit auch zu Änderungen der Überkopplung beitragen wird.

Der Erfindung liegt die Aufgabe zugrunde eine Vorrichtung zur Wegstreckenmessung mit auf optischer Basis arbeitendem Meßelement und ausreichender Wegstrecke zu schaffen, die unter Ausnutzung von Auslenkung und Verbiegung von Lichtleitern eine Messung gewährleistet.

Diese Aufgabe wird erfindungsgemäß entsprechend dem kennzeichnenden Teil des Anspruchs 1 gelöst.

Weiterbildungen und vorteilhafte Ausgestaltungen der Erfindung sind den Ansprüchen 2 bis 5 zu entnehmen.

Die Erfindung wird anhand der beiliegenden Zeichnung näher erläutert. Es zeigen:
Fig. 1 ein zwei Wellenleiter aufweisendes Meßelement,
Fig. 2 ein Querschnitt eines Meßelementes,
Fig. 3 einen weiteren Querschnitt eines Meßelementes,
Fig. 4 ein Meßelement mit Kern- und Ringleitern,
Fig. 5 einen Querschnitt eines Meßelementes,
Fig. 6 einen weiteren Querschnitt eines Meßelementes und
Fig. 7 ein Blockschaltbild.

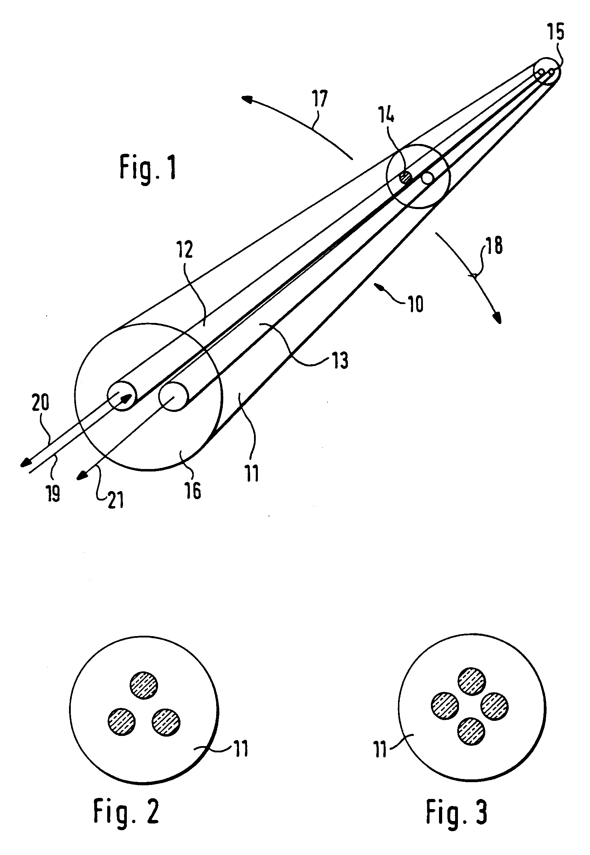

Wie die Darstellung nach Fig. 1 zeigt, besteht das Prinzip eines Meßelementes 10 aus in einem Träger 11 (Hülle) angeordneten Wellenleitern 12, 13, wovon der Wellenleiter 12 kürzer als der Wellenleiter 13 ist. Die dem Sensoreneingang 16 gegenüberliegenden Enden 14, 15 dieser Wellenleiter 12, 13 sind verspiegelt. Wie Fig. 2 und Fig. 3 zeigen ist es auch möglich drei oder vier Wellenleiter unterschiedlicher Länge in einen Träger 11 einzubetten. Das Meßelement 10 ist am Sensoreingang 16 und am gegenüberliegenden Ende gegen seitliche Verschiebungen gehalten aber in seinem Mittelbereich wie durch die Pfeile 17, 18 angedeutet auslenkbar. Wenn der kürzere Wellenleiter 12, wie durch Pfeil 19 angedeutet mit Licht, z.B. impulsförmig abgestrahltem Licht versorgt wird, dann wird bei fehlender Auslenkung dieses Licht vom verspiegelten Ende 14 reflektiert und kann von einem nicht dargestellten optischen Zeitmultiplexgerät erfaßt und ausgewertet werden. Bei fehlender Auslenkung wird also das gesamte durch den Pfeil 20 angedeutete Licht reflektiert und das Zeitmultiplexgerät zeigt keine Auslenkungen an. Ist aber eine Auslenkung erfolgt, dann wird vom eingekoppelten Licht 19 ein bestimmter Betrag des Lichtes in den Wellenleiter 13 übergekoppelt, und zum Sensoreingang und zum verspiegelten Ende 15 geleitet. In den Wellenleiter 12 eingekoppelte Lichtimpulse werden daher vom Sensoreneingang kommend je nach Biegung in andere Wellenleiter übergekoppelt und aufgrund der verschiedenen Wellenleiterlängen reflektiert. Das Zeitmultiplexgerät empfängt die Reflexe und wertet diese nach relativer Intensität und Laufzeit zur Ermittlung der ausgelenkten Wegstrecke aus.

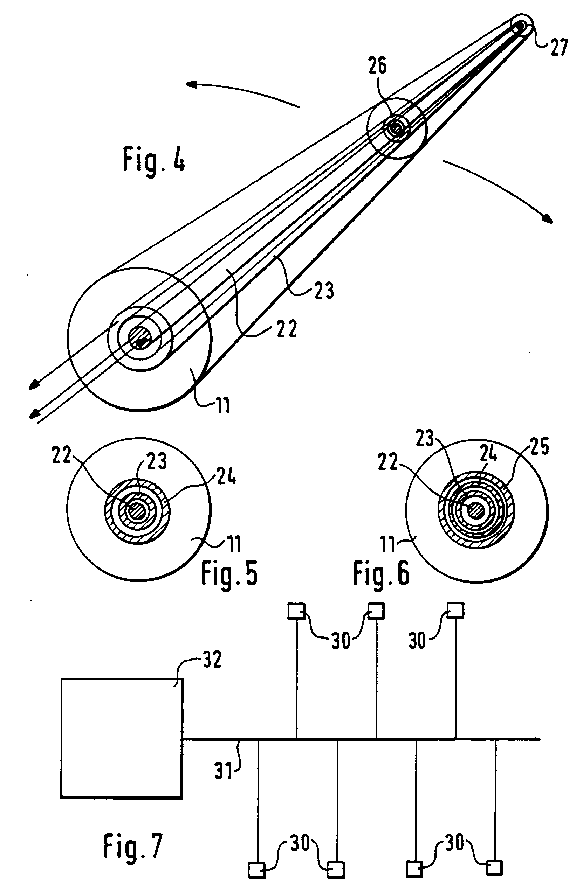

Wie in Fig. 4 bis Fig. 6 dargestellt, ist es auch möglich ein Meßelement 10 mit einem Kernleiter 22 und koaxialen Ringleitern 23, 24, 25 aufzubauen. Der Kernleiter 22 ist dabei kürzer als die koaxialen Ringleiter und die Enden 26, 27 sind ebenfalls verspiegelt. In der Funktion ergibt sich gegenüber den Ausführungsbeispielen nach Fi. 1-3 kein Unterschied. Die gemessenen Intensitäten sind ebenfalls vom Biegezustand abhängig und zueinander reziprok, d.h. eine Intensitätsabnahme in einem Kanal hat eine Zunahme im anderen Kanal zur Folge. Eine gleichmäßige Abnahme der zurückreflektierten Intensitäten z.B. infolge von Temperaturschwankungen, ist ohne Einfluß auf das Meßergebnis, wenn das Intensitätsverhältnis gebildet wird. Ein Meßelement mit einem Kernleiter und Ringleitern hat darüber hinaus den Vorteil einer leichteren Ankopplung an einen normalen Lichtleiter bzw. Faser, aber solche Leiterformen müssen speziell hinsichtlich ihrer Koppelempfindlichkeit entwickelt werden. Für das Verspiegeln der Lichtleiterenden können Aufdampftechnologien oder Sputtertechnologien verwendet werden, aber Ätztechnologien sind in gleicher Weise dafür verwendbar. Das empfindungsgemäße Meßelement kann so ausgelegt werden, daß auch eine Absolutmessung möglich ist, wodurch kurzzeitige Systemausfälle keine Beeinträchtigungen hervorrufen.

Wie das Blockschaltbild nach Fig. 7 zeigt, ist es möglich eine Vielzahl von Sensoren 30 mit dem Meßelement 10 auszurüsten und über einen optischen Datenbus 31 an ein optisches Zeitmultiplexgerät 32 anzukoppeln. Die örtliche Lage der Sensoren wird dann durch eine zeitliche Lage der gemessenen Refelexe gekennzeichnet, wobei sich über den Datenbus der Vorteil eines geschlossenen optischen Lichtweges ergibt. Feuchtigkeitseinwirkungen, Vereisungen oder Verschmutzungen bleiben daher ohne nachteilige Wirkungen auf die Messung.

### Bezugszahlen

- 10: Meßelement
- 11: Träger (Hülle)
- 12: Wellenleiter
- 13: Wellenleiter
- 14: verspiegeltes Ende vom Wellenleiter 12
- 15: Verspiegeltes Ende vom Wellenleiter 13
- 16: Sensoreingang
- 17: Pfeil
- 18: Pfeil
- 19: Pfeil
- 20: Pfeil
- 21: Pfeil
- 22: Kernleiter
- 23: Ringleiter
- 24: Ringleiter
- 25: Ringleiter
- 26: verspiegeltes Ende vom Wellenleiter 22
- 27: verspiegeltes Ende vom Rindleiter 23
- 30: Sensor
- 31: optischer Datenbus
- 32: Zeitmultiplexgerät

## Patentansprüche

1. Vorrichtung zur Wegstreckenmessung
mit einem optischen Meßelement (10),
das mindestens zwei in dichtem Abstand nebeneinander angeordnete Lichtleiter (12,13,22-25) aufweist,
das aus einem länglichen Träger (11) besteht, in den die Lichtleiter (12,13,22-25) zueinander parallel eingebettet sind
und von dessen einem Ende, dem Sensoreingang (16), die Lichtleiter ausgehen, das am Sensoreingang (16) gegen seitliche Verschiebungen gehalten ist und in einem anderen Bereich unter gemeinsamer Verbiegung des Trägers (11) und der Lichtleiter (12,13,22-25) um die zu verschiebende Wegstrecke seitlich verschiebbar ist,
das derart ausgebildet ist, daß bei bestimmter Verbiegung der Lichtleiter ein bestimmter Betrag des in einen Lichtleiter (12,22) eingekoppelten Lichts (19) in den anderen Lichtleiter (13,23-25) überkoppelt, und
das eine Verspiegelung aufweist, durch das Licht, das sich in den Lichtleitern (12,13,22-25) zum anderen Ende des Meßelements (10) hin ausbreitet, zum Sensoreingang (16) zurückreflektiert wird,
mit Mitteln zum Einkoppeln von Licht am Sensoreingang des Meßelements (10), und
mit einer Einrichtung (30,32), durch die das überkoppelte, von der Verspiegelung reflektierte und am Sensoreingang (16) austretende Licht erfaßt wird und aus der Intensität und Laufzeit dieses Lichtes die Verschiebung bzw. Wegstrecke bestimmt wird,
**dadurch gekennzeichnet, daß**
die Mittel zum Einkoppeln von Licht in das Meßelement (10) Licht in nur einen Lichtleiter, den Eingangsleiter (12,22), einkoppeln,
daß der mindestens eine andere Lichtleiter, der Ausgangslichtleiter (13,23-25), an seinem dem Sensoreingang (16) gegenüberliegenden Ende länger ist als der Eingangslichtleiter (12,22), daß jeder Lichtleiter (12, 13, 22-25) an seinem, dem Sensoreingang (16) gegenüberliegenden Ende (14, 15, 26, 27) verspiegelt ist, daß das Meßelement (10) derart ausgebildet ist, daß bei fehlender Verbiegung der Leiter kein Licht vom Eingangs- zum Ausgangslichtleiter überkoppelt und
daß die genannte Einrichtung (30,32) bei Reflexion des gesamten eingekoppelten Lichts vom verspiegelten Ende (14) des Eingangslichtleiters (12,22) keine Verschiebung anzeigt.

2. Meßvorrichtung nach Anspruch 1, dadurch gekennzeichnet, daß das Meßelement (10) weitere im Träger (11) angeordnete parallele und an ihren Enden verspiegelte Lichtleiter unterschiedlicher Länge aufweist.

3. Meßvorrichtung nach Anspruch 1, dadurch gekennzeichnet, daß die Lichtleiter aus einem kürzeren Kernleiter (22) und koaxial dazu verlaufenden längeren Ringleitern bestehen.

4. Meßvorrichtung nach einem der Ansprüche 1 oder 2, dadurch gekennzeichnet, daß für die elektronische Schaltung ein optisches Zeitmultiplexgerät (32) vorgesehen ist.

5. Meßvorrichtung nach einem der Ansprüche 1 bis 3, dadurch gekennzeichnet, daß das optische Zeitmultiplexgerät (32) über einen optischen Datenbus (31) mehrere Sensoren (30) ansteuert bzw. deren Reaktion zur Auswertung empfängt.

## Claims

1. Device for distance measurement
with an optical measuring element (10),
which comprises at least two light guides (12,13,22-25) arranged alongside one another in close proximity,
which consists of an elongated carrier (11) into which the light guides (12,13,22-25) are embedded parallel to one another and from one end of which, the sensor input (16), the light guides emanate, whereby said end is held at the sensor input (16) so as to resist lateral displacements and is capable of being displaced laterally in another region subject to joint distortion of the carrier (11) and of the light guides (12,13,22-25) by the distance to be displaced,
which is designed in such a way that with defined distortion of the light guides a defined amount of the light (19) that is fed into one light guide (12,22) is fed across into the other light guide (13,23-25), and
which has a mirror coating by means of which light spreading out in the light guides (12,13,22-25) towards the other end of the measuring element (10) is reflected back to the sensor input (16),
with means for feeding light in at the sensor input of the measuring element (10), and
with a device (30,32) by means of which the light that has been fed across and reflected by the mirror coating and that emerges at the sensor input (16) is registered and the displacement or distance is determined from the intensity and transmission time of this light,
**characterised in that**
the means for the feeding of light into the measuring element (10) feed light into one light guide only, the input guide (12,22),
in that the at least one other light guide, the output light guide (13,23-25), is longer at its end located opposite the sensor input (16) than the input light guide (12,22),
in that each light guide (12,13,22-25) at its end (14,15,26,27) located opposite the sensor input (16) is mirrored,
in that the measuring element (10) is designed in such a way that in the case in which there is no distortion of the guides no light is fed across from the input light guide to the output light guide, and
in that the stated device (30,32) indicates no displacement in the case of reflection from the mirrored end (14) of the input light guide (12,22) of the entire amount of light that has been fed in.

2. Measuring device according to Claim 1, characterised in that the measuring element (10) comprises additional parallel light guides arranged in the carrier (11) that are mirrored at their ends and are of differing length.

3. Measuring device according to Claim 1, characterised in that the light guides consist of a shorter core guide (22) and longer annular guides extending coaxially therewith.

4. Measuring device according to one of Claims 1 or 2, characterised in that an optical time-multiplex unit (32) is provided for the electronic circuit.

5. Measuring device according to one of Claims 1 to 3, characterised in that via an optical data bus (31) the optical time-multiplex unit (32) drives several sensors (30) or receives their response with a view to evaluation.

## Revendications

1. Dispositif de mesure de la distance parcourue composé d'un élément de mesure optique (10),
lequel présente au moins deux guides de lumière par fibres optiques (12, 13, 22-25) disposés à proximité l'un de l'autre,
lequel se compose d'un support longitudinal (11) dans lequel les guides de lumière par fibres optiques (12, 13, 22-25) sont encastrés parallèlement l'un par rapport à l'autre,
dont une extrémité, à savoir à l'entrée du détecteur (16), dont partent les guides, est retenue contre les déflexions latérales et qui dans une autre zone peut être déplacée latéralement sur la distance à mesurer en pliant solidairement le support (11) et les guides de lumière par fibres optiques (12, 13, 22-25),
lequel est conçu de manière telle que lors d'un pliage déterminé des guides de lumière par fibres optiques, une quantité déterminée de la lumière modulée (19) dans un guide de lumière par fibres optiques (12, 22) est transmise dans l'autre guide de lumière par fibres optiques (13, 23-25),
et lequel présente une couche réfléchissante par laquelle la lumière qui se propage dans les guides (12, 13, 22-25) vers l'autre extrémité de l'élément de mesure (10) est réfléchie dans la direction de l'entrée du détecteur (16),
comprenant des moyens destinés à la modulation de la lumière à l'entrée du détecteur de l'élément de mesure (10), et
comprenant un dispositif (30, 32) grâce auquel la lumière transmise, réfléchie par les couches réfléchissantes et émergeant à l'entrée du détecteur (16), est détectée, l'intensité et le temps de propagation de cette lumière déterminant le déplacement, respectivement la distance parcourue,
**caractérisée en ce que** les moyens destinés à la modulation de la lumière dans l'élément de mesure (10), ne modulent la lumière que dans un seul guide de lumière par fibres optiques, à savoir le guide d'entrée (12, 22),
en ce que au moins un autre guide de lumière par fibres optiques, le guide de sortie (13, 23-25), est plus long à son extrémité opposée à l'entrée du détecteur (16) que le guide d'entrée (12, 22),
en ce que chacun des guides de lumière par fibres optiques (12, 13, 22-25) est métallisé sur son extrémité (14, 15, 26, 27) opposée à l'entrée du détecteur (16), en ce que l'élément de mesure (10) est configuré de telle manière que lors d'une déformation insuffisante du guide, aucune lumière n'est transmise du guide de lumière d'entrée au guide de lumière de sortie et
en ce que le dispositif mentionné (30, 32) ne détecte aucune déformation lors de la réflexion de l'entièreté de la lumière modulée à partie de l'extrémité métallisée (14) du guide de lumière d'entrée (12, 22).

2. Dispositif de mesure de la distance parcourue, caractérisée en ce que l'élément de mesure (10) présente d'autres guides de lumière par fibres optiques de différentes longueurs disposés parallèlement dans le support (11) et métallisés à leurs extrémités.

3. Dispositif de mesure selon la revendication 1, caractérisé en ce que les guides de lumière par fibres optiques se composent d'un conducteur central (22) plus court et de conducteurs cylindriques plus longs placés coaxialement.

4. Dispositif se mesure selon l'une ou l'autre des revendications 1 et 2, caractérisé en ce que un appareil optique de multiplexage dans le temps (32) est prévu pour le couplage électronique.

5. Dispositif de mesure selon l'une ou l'autre des revendications 1 à 3, caractérisé en ce que l'appareil optique de multiplexage dans le temps (32) commande plusieurs détecteurs (30) par l'intermédiaire d'un bus de données (31) optique et reçoit leurs réactions pour permettre l'évaluation.
